# EUROPEAN PATENT SPECIFICATION

(11) **EP 2 507 025 B1**
(45) Date of publication and mention of the grant of the patent: **13.08.2014**
(21) Application number: 10807653.0
(22) Date of filing: 02.12.2010
(51) Int. Cl.: B29C 45/04, B29B 17/00, B29C 45/28

(54) **INJECTION STATION IN A PLANT FOR TREATING PLASTIC MATERIALS**
INJEKTIONSSTATION IN EINER ANLAGE ZUR BEHANDLUNG VON KUNSTSTOFFMATERIALIEN
POSTE D'INJECTION DANS UNE INSTALLATION DE TRAITEMENT DE MATIÈRES PLASTIQUES

(30) Priority: 02.12.2009 IT UD20090221
(43) Date of publication of application: 10.10.2012
(73) Proprietor: Strizzolo, Matteo, 33100 Udine (IT)
(72) Inventor: STRIZZOLO, Matteo, 33100 Udine (IT); STRIZZOLO, Andrea, 33100 Udine (IT)
(74) Representative: Petraz, Gilberto Luigi
(86) International application number: PCT/IB2010/003081
(87) International publication number: WO 2011/067658

(56) References cited:
- DE-A1- 4 307 795
- DE-A1- 4 309 496
- JP-A- 4 146 111
- US-A1- 2004 071 818
- US-A1- 2008 251 974
- US-A1- 2009 108 497
- US-A1- 2009 280 209

## Description

### FIELD OF THE INVENTION

The present invention concerns an injection station in a plant for the treatment of plastic materials, whether they are heterogeneous or homogeneous, for example, but not only, arriving from the recycling of both urban and industrial waste.

In particular the injection station normally provides to inject the plastic materials into molds in order to make molded plastic articles such as for example containers, pallets or others.

The prior art documents DE 43 07 795 A1 and JP 4146111 A describe examples of molding devices for plastic material in which the mold, when the injection step has finished, can be removed from the injection unit in order to be selectively disposed in positions where the molded piece can be cooled and extracted.

In US 2004/071818 A1 a moulding tool having the features of the preamble of claim 1 is disclosed.

### BACKGROUND OF THE INVENTION

An injection station in a plant for the treatment of plastic materials is known, which provides to inject plastic materials into molds so as to make plastic articles.

The known injection station comprises a structural bearing element, for example a support frame, a feed member, which receives the plastic materials arriving from the plant, a plurality of injectors which inject the plastic materials arriving from the feed member and a mold into which the injectors inject the plastic materials.

Molds are known which consist of a fixed body mounted on the structural bearing element and of a mobile body, which is movable with respect to the fixed body by means of a movement device, such as a jack or other.

Both the injectors and the feed member are mounted fixed and solid with at least one part of the mold and the structural element. In this way the mold is always constrained, with at least one of its parts, to the structural element.

This known injection station requires high costs and equipping times, in particular to pass from one production series to another, because it also has to substitute the feed member and the injectors with respect to the mold.

Known injection stations are therefore not suitable for the production of plastic articles in different production batches and/or in the case where there are a lot of varieties of articles produced in the same batch.

Moreover, known injection stations have their productivity conditioned by the time needed for the injection and the cooling of the plastic articles in the mold. Indeed, each molding cycle in known injection station provides an injection time, a cooling time and an extraction time. Since the mold is fixed to the structural bearing element, the injection station is effectively operative only once out of three times, with long and therefore non-productive waiting times.

One purpose of the present invention is to achieve an injection station with greater productivity with respect to known stations.

A further purpose of the present invention is to achieve an injection station which requires reduced equipping times.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, an injection station according to the present invention is applied in a plant for the treatment of homogenous or heterogeneous plastic materials and comprises a frame, which constitutes a structural bearing element of the injection station, and an injection unit which comprises in its turn a feed element fed by a feeder of plastic materials and an injection member able to receive the plastic materials from the feed member. The injection station also comprises at least a mold in which the injection member injects the plastic materials in order to form the article.

According to a characteristic feature of the present invention, the feed member has at least a first feed portion which stays attached to the frame even after the removal of the mold, while the mold has, in a position corresponding to the position of the first portion on the frame, a second feed portion connected to the injection system proper of the mold.

In this way it is possible to use molds of different sizes and shapes, provided that they share the relative second feed portion, which is disposed, in use, in correspondence with the first portion which remains solid with the frame.

A first mold can thus be removed when the injection operation is completed, and a second mold can be immediately located in the injection position, after the first feed portion attached to the frame and the second feed portion which is part of the mold have been aligned and coupled with respect to each other.

The injection station according to the invention also comprises first movement means able to selectively move the mold with respect to the frame, and therefore to the first portion of the feed member, between a first inactive position in which the mold is distanced from the first portion, and a second injection position in which the mold is operatively connected, by means of the second portion, with the first portion of the feed member.

With the present invention, as it is possible to selectively move the mold between the two positions of inactivity and injection, the injection operations can be carried out independently of the possible operations to cool and extract the article. Both the cooling and the extraction can be carried out in the first inactive position, allowing, at the same time, the operative association of a new mold to the same feed member. In this way, the injection operation can be carried out continuously in different molds, even suitable to make different articles, provided, as we said, they have the relative portion of the feed member disposed and configured for coupling with the portion of the feed member which stays fixed to the frame.

This advantage on the one hand allows to optimize the productivity of the injection station exploiting the injection potential of the injection unit to the full, and on the other hand also allows a unitary production of different articles, made with molds of different shapes and sizes, substantially without affecting the running costs of the injection station.

A further advantage of the injection station according to the present invention is that it reduces, if not eliminates, the equipping times and costs of passing from one production series to another, in that, with the solution of the present invention, the mold or molds are already provided mobile by means of the first movement means and therefore no time is needed for them to be disassembled from the feed member.

According to a variant of the present invention, the injection station comprises second movement means able to move the mold between the first position or the second position and a third position outside the bulk of the feed member.

This solution allows to optimize the movements of the molds, above all in the case where the injection unit is also used for injection into other molds, further reducing the production times of the articles.

Advantageously, in this variant solution, the movement means move the molds in a direction substantially orthogonal to a lying plane of the mold in the first inactive position, while the second movement means move the molds in a direction substantially parallel with respect to the lying plane of the mold.

According to a further variant of the present invention, the feed member comprises at least a feed pipe able to condition the passage of the plastic materials, arriving from the feeder, inside the feed member itself.

The feed pipe is provided with at least a cut-off element, which can be selectively activated, in order to selectively intercept the passage of the plastic materials inside the feed pipe, in correspondence with a narrower section thereof.

According to the invention, the cut-off element is provided between the first position of the feed member which stays fixed to the frame and the second portion which is solid with the mold.

When the injection procedure is finished, the cut-off element is disposed in a closed position, thus intercepting the plastic material fed. Then the mold is separated from the frame and taken to the cooling position by the movement means, and a new mold, possibly different from the first, is brought into the work position, associating its second portion of the feed member to the first portion, solid with the frame; finally the cut-off element is opened again and a new injection procedure can be started.

This solution allows to interrupt the feed of the plastic materials from the feed member to the injection member, or more generally, from the injection unit toward the mold, when the mold is released from the injection unit and is brought into the first inactive position. Vice versa it allows to feed the plastic materials from the injection unit toward the mold, when the latter is in its second injection position.

The injection member comprises a plurality of injectors to inject plastic materials into the molds. Each injector is associated with a cut-off element, consisting of a rod driven by an actuator, which selectively allows or prevents the injection of plastic materials into the molds. The cut-off element can also function as a shearer of the plastic materials.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a front view of an injection station according to the present invention;
- fig. 2 is a view in section from II to II of the injection station in fig. 1;

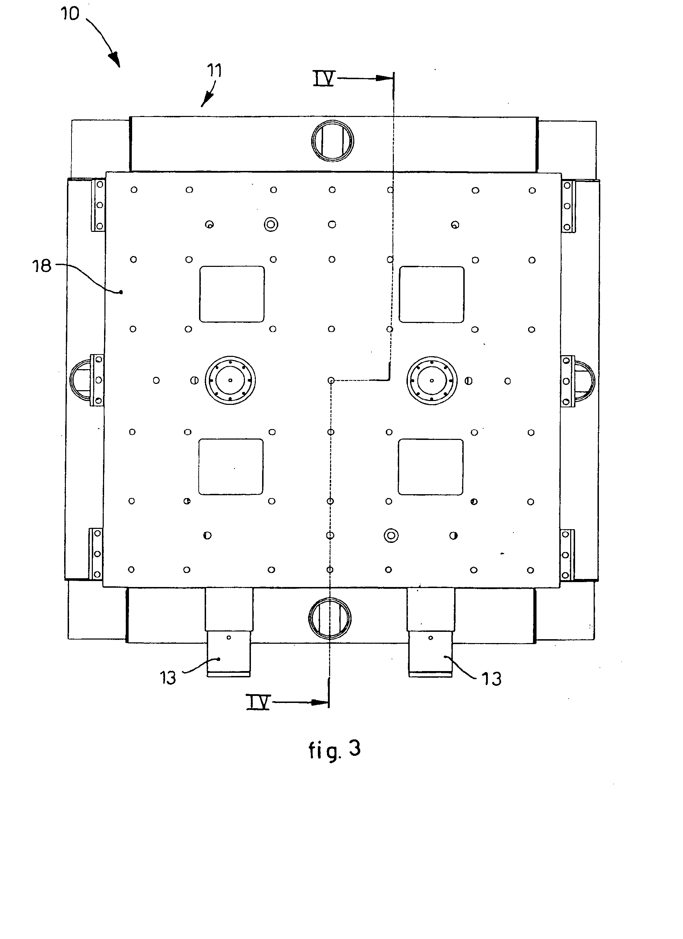

- fig. 3 is a view from above of the injection station in fig. 1;
- fig. 4 is a view in section from IV to IV of the injection station in fig. 3;
- fig. 5 is a schematic view of an injection station according to the present invention;
- fig. 6 is a front view of an enlarged detail of the injection station in fig. 4;
- figs. 7a and 7b show the injection station according to the present invention in two separate operating steps, respectively fig. 7a in the injection step and fig. 7b in the mold translation step;
- figs. 8a, 8b and 8c show different possible configurations of mold usable with the injection station according to the present invention.

### DETAILED DESCRIPTION OF SOME PREFERENTIAL FORMS OF EMBODIMENT

With reference to the attached drawings, an injection station 10 of a plant for treating heterogeneous and homogeneous plastic materials provides to inject the plastic materials into molds in order to make plastic articles, by means of molding.

The injection station 10 comprises a frame 25 that constitutes a structural bearing element of the injection station 10, an injection unit 39 and a mold 17.

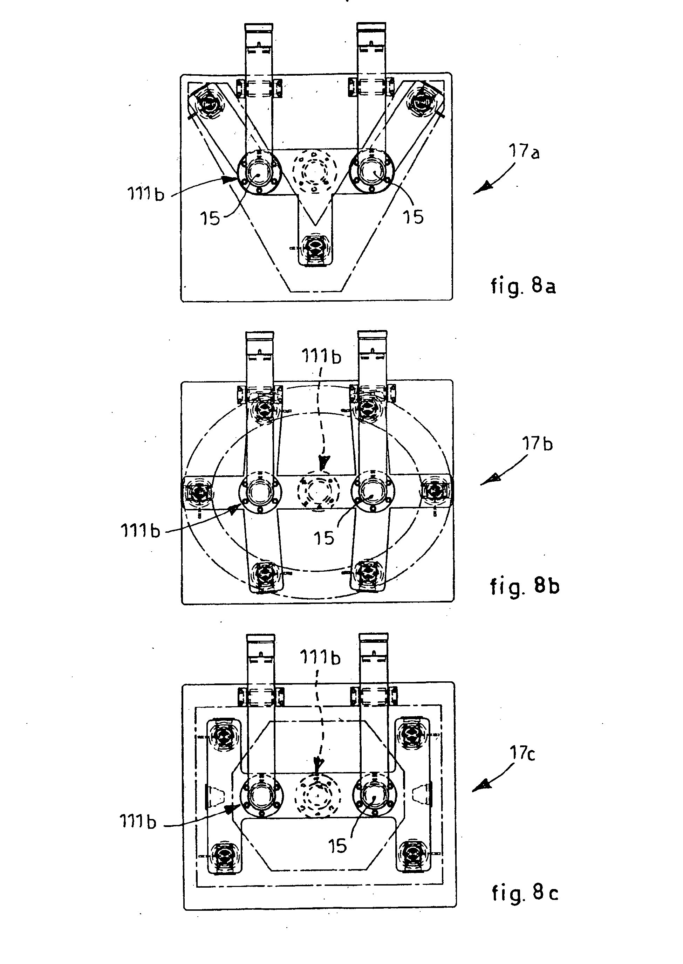

The mold 17 can have different shapes and sizes, some of which are indicated with the reference numbers 17a, 17b and 17c respectively in figs. 8a, 8b and 8c.

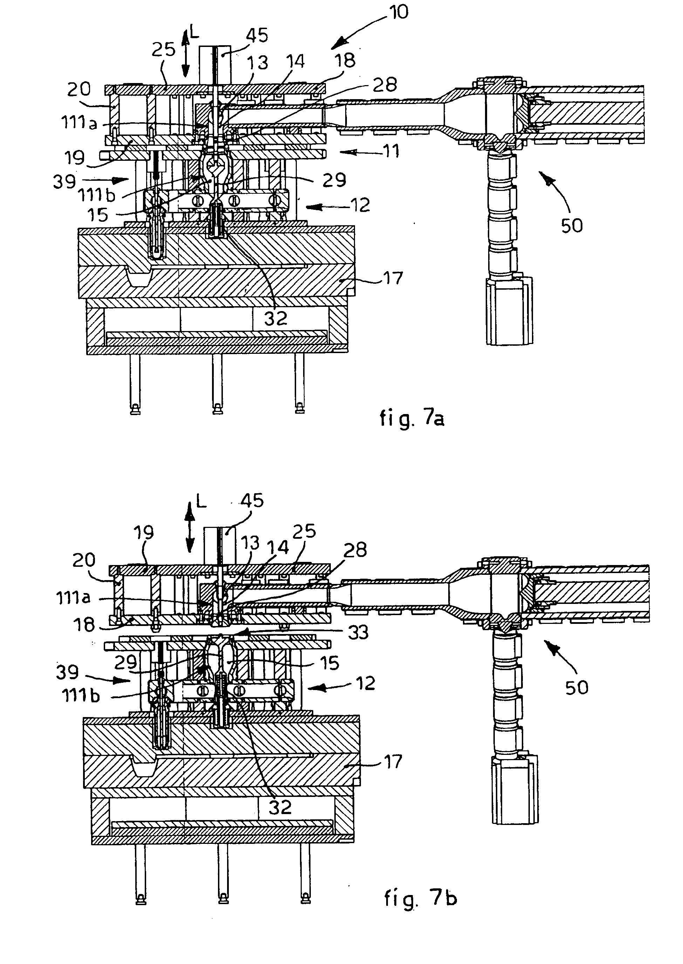

The injection unit 39 comprises a feed member 11, a first portion of which is attached to the frame 25, as will be explained hereafter in more detail. The feed member 11 is fed by a feeder of plastic materials of a known type, indicated with the number 50 only in figs. 7a and 7b, and cooperates with an injection member 12, which constitutes an element proper to each mold 17a, 17b and 17c, which is able to receive the plastic materials from the feed member 11 and inject them into the mold 17, according to the distribution and the number of injectors proper to each of the molds 17.

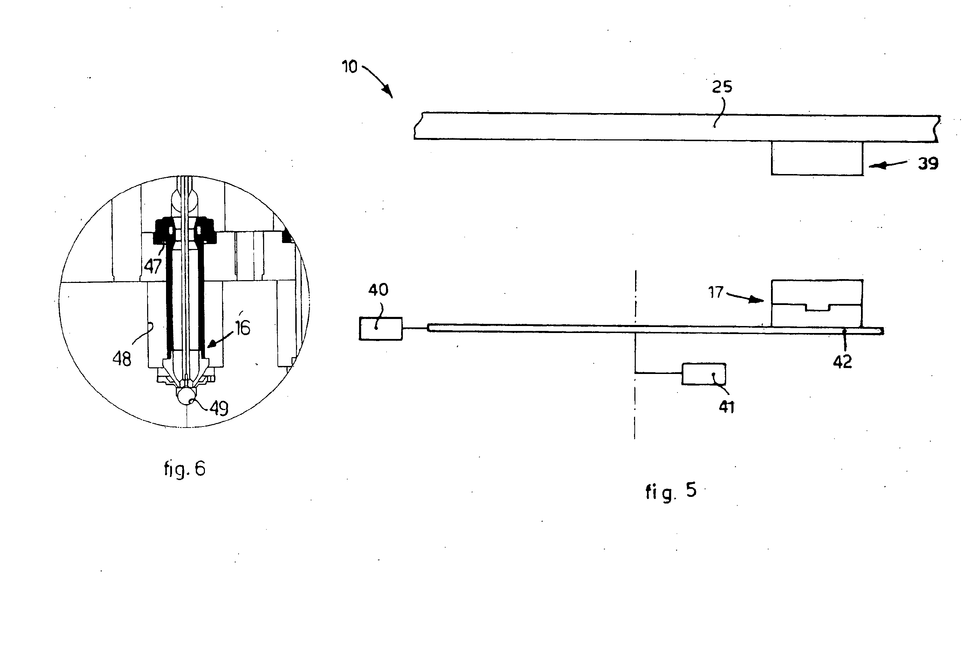

The mold 17 is disposed on a support element, for example a mobile platform 42 or turntable, and is selectively movable with respect to the frame 25, by means of first movement means 40, shown schematically in fig. 5, from a first position in which it is distanced from the frame 25 to a second injection position in which it is operatively connected to the frame 25 and cooperating with it.

In this second position, in particular, it is possible to inject the plastic materials arriving from the injection unit 39 inside the mold 17.

The mold 17 is also movable, by means of second movement means 41, shown schematically in fig. 5, from the first or second position to a third position outside the bulk of the feed member 11.

In the first or third position it is possible to perform the step of cooling the plastic materials and/or the step of extracting the articles from the molds 17, while in the second injection position, associated with the frame 25, the plastic materials are injected by the injection unit 39 inside the molds 17.

The feed member 11 is subdivided into two portions, respectively a first portion 111a solid with the frame 25 and a second portion 111b solid with the relative mold 17.

Each of the feed members 11 comprises a plurality of first feed pipes, or collectors 13, in this case two, interposed between an upper support plate 18 and a lower support plate 19, disposed substantially parallel with respect to each other at a distance established by a plurality of spacer elements 20 attached to the two plates 18 and 19.

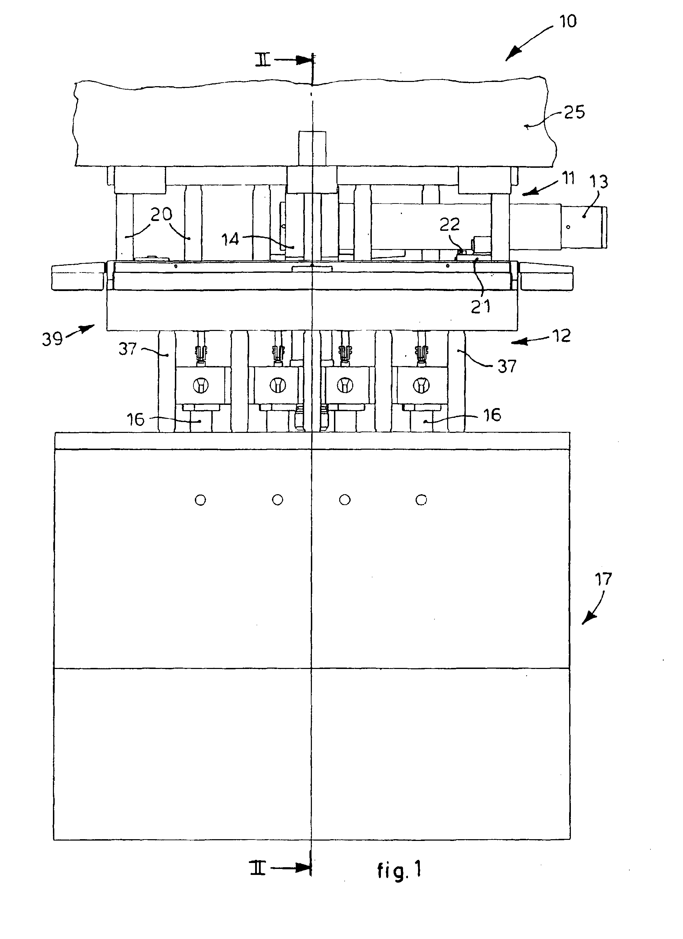

The first feed pipes 13 are mounted on the lower support plate 19 by means of brackets 21 and clamping elements 22 (fig. 1).

Each first feed pipe 13 is connected at one end to the feeder 50 in order to introduce the plastic materials under pressure and at the other end to a relative second feed pipe, or distributor, 14 disposed perpendicularly to it and defining an elbow-shaped deflection of the stream of the plastic materials.

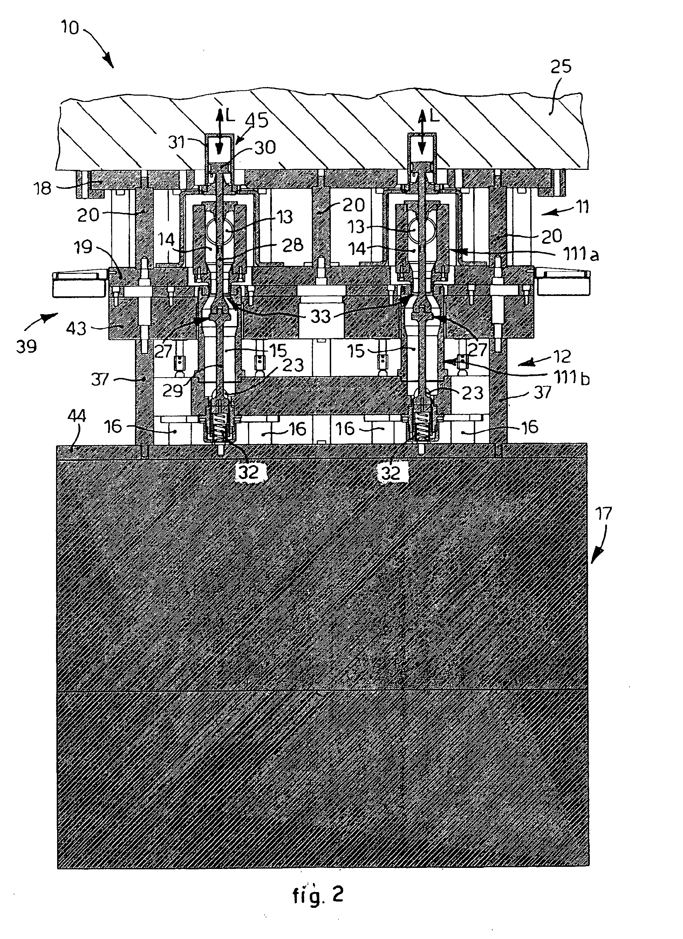

The injection member 12 comprises a third feed pipe or distributor 15 for each second feed pipe 14, as shown in figs. 2, 7a and 7b.

In particular the first 13 and second 14 pipes define a first portion 111a of the feed member 11, that is the part solid with the frame 25 which stays attached even after the disassociation of the frame 25 and mold 17, while the pipe 15 constitutes the second portion 111b of the feed member 11, that is, the part solid with the mold 17 by means of which the plastic material is then distributed to the injection member 12 which is proper to each of the molds 17a, 17b and 17c.

There can be two systems of pipes 13-14, as indicated in the continuous line in figs. 8a, 8b and 8c, or only one (as indicated in the line of dashes), or even three or more.

In a condition when the frame 25 and mold 17 are associated, the feed pipes 14 and the relative feed pipes 15 are also operatively connected with respect to each other, so as to determine a single path along which to direct the plastic materials arriving from the first feed pipe 13.

In particular the connection between the second feed pipe 14 and the third feed pipe 15 identifies a narrower section 33.

In particular, inside the second and the third feed pipe, 14 and 15 respectively, a cut-off 27 is disposed comprising an upper rod 28 and a lower rod 29 associated respectively to the second feed pipe 14 and to the third feed pipe 15.

The upper rod 28 is mechanically driven at one end by a linear actuator 45, in this case a piston 30 which runs inside a cylinder 31, and is moved by it with alternate rectilinear motion in a direction coaxial to the second feed pipe 14, as shown by the arrow L in figs. 2, 7a and 7b.

The lower rod 29 is mechanically driven at one end by a spring 32, and this too is moved as shown by the arrow L.

In the condition in which the feed member 11 and the injection member 12 are operatively connected, for example during the injection step, the upper rod 28 and the lower rod 29 are connected to each other at two free and cooperating ends, in correspondence with the narrower section 33.

In this condition, the actuator 45 exerts a force on the upper rod 28 which opposes the force exerted by the spring 32 on the lower rod 29, and such forces are opportunely modulated so that the connected and cooperating free ends are positioned, due to the balanced forces, outside the narrower section 33. In this way the plastic materials flow, without meeting obstacles, along the second and third feed pipes, 14 and 15 respectively.

The usable passage sections of the feed pipes 14 and 15 are increased, in order to avoid blockages of material.

When the injection step is finished, the actuator 45 is activated to exert an upward traction force on the upper rod 28, which brings the free end of the rod 28 nearer to the connection portion of the second feed pipe 14, in order to prevent the exit of the plastic materials therefrom.

In the same way the spring 32 exerts an upward elastic force on the lower rod 29 in order to induce the closure of the connection portion of the third feed pipe 15 in correspondence with the narrower section 33.

From this condition, in which both feed pipes 14 and 15 are closed by the respective elements of the cut-off 27, the mold 17 can be separated from the frame 25, and transported to its second position in order to allow the piece to cool, and then possibly in its third position in order to allow the piece to be extracted.

At the same time as this movement, a new mold 17, even different from the preceding one, can be brought into cooperation with the frame 25 for a new injection procedure.

It is sufficient that the mold 17 provides the respective injection portions 111b disposed in correspondence with the injection portions 111a provided on the frame 25 in order to couple these portions with each other and achieve the connection between the feed member 12 present on the mold 17 and the part of the feed member 11 (that is, the pipes 13 and 14) connected to the feeder 50 of the plastic materials.

In this way, the injection step can start again after a very short stop time, and even different molds 17 can be used in sequence without requiring down times for equipping or other configuration changes.

As far as the injection member 12 of each mold 17 is concerned, it also comprises a plurality of main distribution pipes 23, disposed transverse to the third feed pipe 15 and communicating with it, to which the plastic materials arriving from the feed pipes 13, 14, 15 are directed, in order to be distributed in a desired way, and a plurality of secondary distribution pipes 24, consisting of branches of the main pipes 23, which achieve a capillary distribution network of the plastic materials.

The injection member 12 also comprises a plurality of injectors 16, an upper plate 43 and a lower plate 44.

The injectors 16 are mounted on the upper plate 43 and on the lower plate 44, which serve as supports.

The plates 43 and 44 are disposed substantially parallel to each other at a distance established by a plurality of spacer elements 37.

The injectors 16 are aligned with each other on a plurality of rows, four in the case shown in fig. 1, each fed by a secondary distribution pipe 24 and provided with an aperture in order to inject the plastic materials into a pipe 49 made inside the mold 17 when the mold 17 is in the second injection position.

Each injector 16 also comprises a cut-off rod 34, having a closing end with a shape mating with that of the aperture of the injector 16 and cooperating with it in order to close the aperture by means of a sealed coupling.

The cut-off rod 34 is mechanically driven in this case by a linear actuator 46, consisting of a piston 35 which runs inside a cylinder 36.

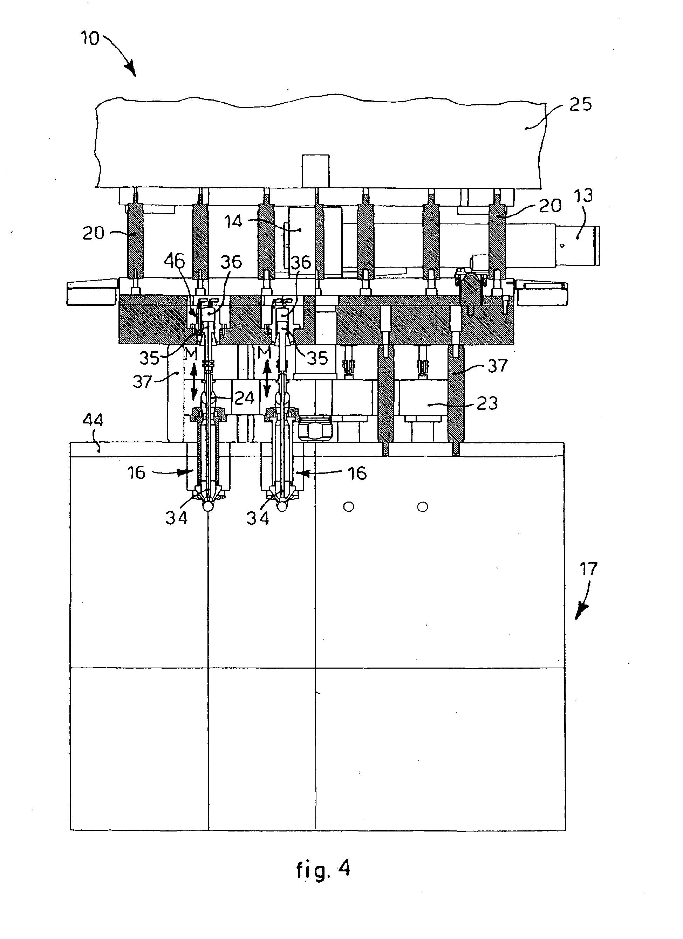

The linear actuator 46 moves the cut-off rod 34 according to a translational movement upward and/or downward, as shown by the arrow M in fig. 4.

In particular, if the cut-off rod 34 is thrust downward, the closing end of the cut-off rod 34 couples with the aperture of the injector 16, closing it and consequently selectively blocking the exit of the plastic materials. The coupling also promotes the shearing of the plastic materials or foreign bodies in the plastic materials. On the contrary, if the cut-off rod 34 is thrust upward, the closing end of the cut-off rod 34 uncouples from the aperture, leaving the passage of the plastic materials toward the mold 17 free.

As shown in fig. 6, a cupped spring 47 is also associated with each injector 16, able to promote a controlled oscillation of the injector 16 when the mold 17 is connected to the injection member 12. The oscillation allows to center the injector 16 inside a relative housing seating 48 made in the mold 17 and flared in order to facilitate the correct centering of the injectors 16 inside it.

The housing seatings 48 are connected to the pipes 49 for the distribution of the plastic materials in the mold 17.

## Claims

1. Injection station used to inject plastic material inside molds (17; 17a, 17b, 17c) in order to make plastic articles, said station comprising a frame (25) constituting a structural bearing element, an injection unit (39) comprising a feed member (11) fed by a feeder (50) of plastic material, and an injection member (12) proper to the mold (17) able to receive the plastic material from the feed member (11), wherein the feed member (11) consists of two portions respectively first (111a; 13, 14) and second (111b; 115) separated from each other by a first cut-off element (27) that can be selectively opened/closed, wherein said first portion (111a) of the feed member (11) is solidly associated with said frame (25) and said second portion (111b) of the feed member (11) is solidly associated with said mold (17) and is connected to said injection member (12), and wherein said two portions (111a, 13, 14; 111b, 15) can be selectively coupled with respect to each other at least in the injection step of the plastic material when said mold (17) is associated with said frame (25), wherein said injection member (12) proper to the mold (17) comprises a plurality of injectors (16) to inject plastic materials into the molds (17), **characterized in that** each injector (16) is associated with a second cut-off element (34) having a closing end with a shape mating with that of the aperture of said injector (16) and cooperating with it in order to close the aperture by means of a sealed coupling, said second cut-off element (34) being a rod driven by an actuator (46) that selectively allows or prevents the injection of plastic materials into the molds (17), wherein, in a condition in which both said two portions of the feed member (11) are closed by respective elements of said first cut-off element (27), a mold (17) is adapted to be separated from said frame (25) and transported in a position wherein the plastic article is allowed to cool, and a new mold (17), even different from the preceeding one, is adapted to be brought into cooperation with said frame (25) for a new injection procedure.

2. Injection station as in claim 1, **characterized in that** said first portion (111a) of the feed member (11) comprises at least a first feed pipe or collector (13), connected to said feeder (50) of plastic material, and at least a second feed pipe or distributor (14), substantially orthogonal to said first pipe (13), while said second portion (111b) of the feed member (11) comprises at least a third feed pipe (15) to distribute the plastic material fed to the injection member (12) of the mold (17), and **in that** said cut-off element (27) comprises an upper rod (28) and a lower rod (29) associated respectively to said second feed pipe (14) and to said third feed pipe (15), wherein the upper rod (28) is mechanically driven at one end by an actuator (45), and is moved by it with alternate rectilinear motion in a direction coaxial to said second feed pipe (14), and wherein said lower rod (29) is mechanically driven at one end by a spring (32) in the same direction of the rectilinear motion of said upper rod (28).

3. Injection station as in claim 1, **characterized in that** it comprises first movement means (40) able to selectively move the mold (17) with respect to the frame (25), between a first inactive position in which said mold (17) is distanced from said frame (25) and a second injection position in which said first (111a) and said second portion (111b) of the feed member are coupled with each other, said cut-off element (27) is open and said mold (17) is operatively connected and cooperating with said frame (25).

4. Injection station as in claim 1 and 3, **characterized in that** it comprises second movement means (41) able to move the mold (17) between said first position or said second position and a third position outside the bulk of the feed member (11).

5. Injection station as in claim 1, **characterized in that** a cupped spring (47) is also associated with each injector (16) to promote a controlled oscillation of the injector (16) when the mold (17) is connected to the injection member (12), allowing to center the injector (16) inside a relative seating (48) made in the mold (17).

6. Injection station as in claim 2, **characterized in that** the actuators (45, 46) are linear and comprise a piston (30, 35) that slides inside a cylinder (31, 36).

## Patentansprüche

1. Spritzstation, die verwendet wird, um Kunststoffmaterial in Formen (17; 17a, 17b, 17c) einzuspritzen, um Kunststoffartikel herzustellen, wobei die Station über einen Rahmen (25), der ein Strukturlagerelement bildet, über eine Spritzeinheit (39) mit einem Zuführteil (11), das durch eine Zuführleitung (50) mit Kunststoffmaterial beschickt ist, und über ein zu der Form (17) passendes Einspritzteil (12) verfügt, das dazu eingerichtet ist, das Kunststoffmaterial von dem Zuführteil (11) aufzunehmen, wobei das Zuführteil (11) aus zwei Abschnitten, nämlich aus einem ersten (111 a; 13, 14) und aus einem zweiten (111b; 115), besteht, die durch ein erstes Absperrelement (27) voneinander getrennt sind, das wahlweise öffenbar/schließbar ist, wobei der erste Abschnitt (111a) des Zuführteils (11) fest mit dem Rahmen (25) verbunden ist und wobei der zweite Abschnitt (111 b) des Zuführteils (11) fest mit der Form (17) verbunden ist und mit dem Einspritzteil (12) in Verbindung steht, und wobei die beiden Abschnitte (111 a, 13, 14; 111 b, 15) wahlweise mit Bezug aufeinander wenigstens bei dem Einspritzschritt des Kunststoffmaterials koppelbar sind, wenn die Form (17) mit dem Rahmen (25) verbunden ist, wobei das zu der Form (17) passende Einspritzteil (12) eine Anzahl von Einspritzdüsen (16) aufweist, um Kunststoffmaterialien in die Formen (17) einzuspritzen, **dadurch gekennzeichnet, dass** jede Einspritzdüse (16) mit einem zweiten Absperrelement (34) gekoppelt ist, das ein Verschlussende mit einer Gestalt aufweist, die zu der der Öffnung der Einspritzdüse (16) passt und mit ihr zusammenwirkt, um die Öffnung durch eine dichte Verkoppelung zu schließen, wobei das zweite Absperrelement (34) eine durch ein Betätigungsteil (46) angetriebene Stange ist, die wahlweise das Einspritzen von Kunststoffmaterialien in die Formen (17) erlaubt oder verhindert, wobei in einem Zustand, in dem beide Abschnitte des Zuführteils (11) durch die jeweiligen Elemente des ersten Absperrelements (27) geschlossen sind, eine Form (17) dazu eingerichtet ist, von dem Rahmen (25) getrennt und in eine Position gebracht zu werden, in der der Kunststoffartikel auskühlt, und eine neue Form (17), auch eine andere als die vorangehende, dazu eingerichtet ist, für einen neuen Spritzvorgang mit dem Rahmen (25) zusammenzuwirken.

2. Spritzstation nach Anspruch 1, **dadurch gekennzeichnet, dass** der erste Abschnitt (111a) des Zuführteils (11) wenigstens ein erstes Zuführrohr oder einen Sammler (13), das/der mit der Zuführleitung (50) des Kunststoffmaterials verbunden ist, und wenigstens ein zweites Zuführrohr oder einen Verteiler (14) aufweist, das/der im Wesentlichen rechtwinklig zu dem ersten Rohr (13) ist, während der zweite Abschnitt (111 b) des Zuführteils (11) wenigstens ein drittes Zuführrohr (15) aufweist, um das dem Einspritzteil (12) der Form (17) zugeführte Kunststoffmaterial zu verteilen, und dass das Absperrelement (27) eine obere Stange (28) sowie eine untere Stange (29) aufweist, die jeweils mit dem zweiten Zuführrohr (14) und dem dritten Zuführrohr (15) verbunden sind, wobei die obere Stange (28) mechanisch an einem Ende von einem Betätigungsteil (45) angetrieben sowie von ihm mit einer geradlinigen Hin- und Herbewegung in einer zu dem zweiten Zuführrohr (14) koaxialen Richtung bewegt ist und wobei die untere Stange (29) mechanisch an einem Ende durch eine Feder (32) in die gleiche Richtung der geradlinigen Bewegung der oberen Stange (28) angetrieben ist.

3. Spritzstation nach Anspruch 1, **dadurch gekennzeichnet, dass** sie erste Bewegungsmittel (40) aufweist, die dazu eingerichtet sind, die Form (17) mit Bezug auf den Rahmen (25) wahlweise zwischen einer ersten inaktiven Position, in der die Form (17) von dem Rahmen (25) beabstandet ist, und einer zweiten Einspritzposition, in der der erste (111a) und der zweite Abschnitt (111 b) des Zuführteils miteinander gekoppelt sind, wobei das Absperrelement (27) offen und die Form (17) funktionsfähig verbunden ist und mit dem Rahmen (25) zusammenwirkt.

4. Spritzstation nach Anspruch 1 und 3, **dadurch gekennzeichnet, dass** sie zweite Bewegungsmittel (41) aufweist, die dazu eingerichtet sind, die Form (17) zwischen der ersten Position oder der zweiten Position und einer dritten Position außerhalb des räumlich in Anspruch genommenen Bereichs des Zuführteils (11) zu bewegen.

5. Spritzstation nach Anspruch 1, **dadurch gekennzeichnet, dass** weiterhin mit jeder Einspritzdüse (16) eine Tellerfeder (47) verbunden ist, um eine gesteuerte Oszillation der Einspritzdüse (16) zu bewirken, wenn die Form (17) mit dem Einspritzteil (12) verbunden ist, was ermöglicht, die Einspritzdüse (16) in einem zugehörigen, in der Form (17) ausgebildeten Lagerung (48) zu zentrieren.

6. Spritzstation nach Anspruch 2, **dadurch gekennzeichnet, dass** die Betätigungsteile (45, 46) gerade sind und einen Kolben (30, 35) aufweisen, der in einem Zylinder (31, 36) gleitet.

## Revendications

1. Station d'injection utilisée pour injecter de la matière plastique à l'intérieur de moules (17, 17a, 17b, 17c) afin de fabriquer des articles en plastique, ladite station comprenant un cadre (25) constituant un élément de support structurel, une unité d'injection (39) comprenant un élément d'alimentation (11) alimenté par un dispositif d'alimentation (50) en matière plastique, et un élément d'injection (12) spécifique au moule (17) apte à recevoir la matière plastique en provenance de l'élément d'alimentation (11), dans lequel l'élément d'alimentation (11) se compose de deux parties respectivement première (111a, 13, 14) et seconde (111b ; 115) séparées l'une de l'autre par un premier élément de coupure (27) qui peut être ouvert / fermé de manière sélective, dans lequel ladite première partie (111a) de l'élément d'alimentation (11) est solidement associée audit cadre (25) et ladite seconde partie (111b) de l'élément d'alimentation (11) est solidement associée audit moule (17) et est connectée à l'élément d'injection (12), et dans lequel lesdites deux parties (111a, 13, 14, 111b, 15) peuvent être couplées de manière sélective l'une par rapport à l'autre au moins dans l'étape d'injection de la matière plastique lorsque ledit moule (17) est associé audit cadre (25), dans lequel ledit élément d'injection (12) spécifique au moule (17) comprend une pluralité d'injecteurs (16) pour injecter des matières plastiques dans les moules (17), **caractérisé en ce que** chaque injecteur (16) est associé à un second élément de coupure (34) ayant une extrémité de fermeture avec une forme correspondant à celle de l'ouverture dudit injecteur (16) et coopérant avec lui afin de fermer l'ouverture au moyen d'un accouplement étanche, ledit second élément de coupure (34) étant une tige entraînée par un actionneur (46) qui autorise ou empêche de manière sélective l'injection de matières plastiques dans les moules (17), dans lequel, dans un état dans lequel lesdites deux parties de l'élément d'alimentation (11) sont toutes les deux fermées par des éléments respectifs dudit premier élément de coupure (27), un moule (17) est apte à être séparé dudit cadre (25) et transporté dans une position dans laquelle l'article en plastique est laissée à refroidir, et un nouveau moule (17), même différent du moule précédent, est apte à être amené en coopération avec ledit cadre (25) pour une nouvelle procédure d'injection.

2. Station d'injection selon la revendication 1, **caractérisée en ce que** ladite première partie (111a) de l'élément d'alimentation (11) comprend au moins un premier tuyau d'alimentation ou collecteur (13), connecté audit dispositif d'alimentation (50) en matière plastique, et au moins un second tuyau d'alimentation ou distributeur (14), sensiblement orthogonale audit premier tuyau (13), tandis que ladite seconde partie (111b) de l'élément d'alimentation (11) comprend au moins un troisième tuyau d'alimentation (15) pour distribuer la matière plastique fournie à l'élément d'injection (12) du moule (17), et **en ce que** ledit élément de coupure (27) comporte une tige supérieure (28) et une tige inférieure (29) associée respectivement audit deuxième tuyau d'alimentation (14) et à audit troisième tuyau d'alimentation (15), dans lequel la tige supérieure (28) est mécaniquement entraînée au niveau d'une extrémité par un actionneur (45), et est déplacée par celui-ci avec un mouvement rectiligne alternatif dans une direction coaxiale par rapport audit deuxième tuyau d'alimentation (14), et dans lequel ladite tige inférieure (29) est mécaniquement entraînée au niveau d'une extrémité par un ressort (32) dans la même direction de mouvement rectiligne de ladite tige supérieure (28).

3. Station d'injection selon la revendication 1, **caractérisée en ce qu'**elle comprend des premiers moyens de déplacement (40) capables de déplacer de manière sélective le moule (17) par rapport au cadre (25), entre une première position inactive dans laquelle ledit moule (17) est éloigné dudit cadre (25) et une seconde position d'injection dans laquelle ladite première (11 la) et ladite seconde partie (111b) de l'élément d'alimentation sont couplées l'une avec l'autre, ledit élément de coupure (27) est ouvert et ledit moule (17) est connectée de manière fonctionnelle et en coopération avec ledit cadre (25).

4. Station d'injection selon la revendication 1 et 3, **caractérisée en ce qu'**elle comprend des seconds moyens de déplacement (41) capables de déplacer le moule (17) entre ladite première position ou ladite deuxième position et une troisième position à l'extérieur de la majeure partie de l'organe d'alimentation (11).

5. Station d'injection selon la revendication 1, **caractérisée en ce qu'**un ressort en forme de coupe (47) est également associée à chaque injecteur (16) pour permettre une oscillation contrôlée de l'injecteur (16) lorsque le moule (17) est connecté à l'élément d'injection (12), ce qui permet de centrer l'injecteur (16) par rapport à l'intérieur d'un siège (48) réalisé dans le moule (17).

6. Station d'injection selon la revendication 2, **caractérisée en ce que** les actionneurs (45, 46) sont linéaires et comprennent un piston (30, 35) qui coulisse à l'intérieur d'un cylindre (31, 36).
